# EUROPEAN PATENT SPECIFICATION

(11) **EP 4 667 799 B1**
(45) Date of publication and mention of the grant of the patent: **30.09.2026**
(21) Application number: 24756735.7
(22) Date of filing: 06.02.2024
(51) Int. Cl.: F16L 15/04

(54) **THREADED CONNECTION**
GEWINDEVERBINDUNG
RACCORD FILETÉ

(30) Priority: 13.02.2023 JP 2023019623
(43) Date of publication of application: 24.12.2025
(73) Proprietor: NIPPON STEEL CORPORATION, Chiyoda-ku Tokyo 100-8071 (JP); Vallourec Oil and Gas France, 59620 Aulnoye-Aymeries (FR)
(72) Inventor: INOSE, Keita, Tokyo 100-8071 (JP); SUGINO, Masaaki, Tokyo 100-8071 (JP); KURIO, Satoshi, Tokyo 100-8071 (JP); OGAWA, Masahiro, Tokyo 100-8071 (JP); MORISHIGE, Yuya, Tokyo 100-8071 (JP); WADA, Akira, Tokyo 100-8071 (JP)
(74) Representative: J A Kemp LLP
(86) International application number: PCT/JP2024/003871
(87) International publication number: WO 2024/171885

(56) References cited:
- EP-A1- 3 093 543
- EP-B1- 3 205 918
- WO-A1-2015/033997
- WO-A1-2015/033997
- WO-A1-2015/105054
- WO-A1-2016/056222
- WO-A1-2017/213048
- WO-A1-2018/135267
- WO-A1-2019/093311
- CN-A- 114 809 945
- CN-A- 114 809 945
- CN-U- 210 888 836
- JP-A- 2006 526 747
- JP-A- 2014 013 052
- US-A1- 2005 248 153
- US-B1- 6 237 967

## Description

### TECHNICAL FIELD

The present disclosure relates to a threaded connection used to connect long-length pipes, such as oil-well pipes.

### BACKGROUND ART

Mining of underground resources in oil wells, natural-gas wells, etc. (hereinafter collectively referred to as "oil wells" or the like) involves the use of casing that forms multi-layer well walls or tubing positioned within the casing to produce oil or gas. Such casing or tubing is constructed by connecting a large number of steel pipes in series using a threaded connection, such as those taught by Patent Documents 1 to 4, discussed further below. A steel pipe used in an oil well is sometimes referred to as oil-well pipe.

Threaded connections are generally categorized as integral type and coupling type.

An integral connection directly connects oil-well pipes. Specifically, a female thread is provided on one end of each oil-well pipe, while a male thread is provided on the other end of each oil-well pipe; into the female thread on one oil-well pipe is screwed the male thread on another oil-well pipe, such that these oil-well pipes are connected.

In the case of a coupling-type connection, oil-well pipes are connected using a tubular coupling. Specifically, a female thread is provided on each of the ends of the coupling, while a male thread is provided on each of the ends of each oil-well pipe. Then, one male thread on one oil-well pipe is screwed into one female thread on the coupling and one male thread on another oil-well pipe is screwed into the other female thread of the coupling, such that these oil-well pipes are connected. That is, a coupling-type connection connects a pair of pipes, one of which is an oil-well pipe while the other one is a coupling.

An end of an oil-well pipe on which a male thread is provided includes an element to be inserted into a female thread provided on an oil-well pipe or a coupling, and thus is usually referred to as pin. An end of an oil-well pipe or coupling on which a female thread is provided includes an element for receiving a male thread provided on an oil-well pipe, and thus is referred to as box. Theoretically, it is also possible to provide a pin on an end of a coupling while providing a box on an end of an oil-well pipe.

In recent years, there have been trends to drill still deeper wells at higher temperatures and higher pressures. In deep wells, where complexities of formation-pressure distribution with depth necessitate increased casing layers, slim-type threaded connections are sometimes used, whose maximum outer diameter at joint, i.e. box outer diameter, is substantially equal to the outer diameter of the pipe body of the oil-well pipe. A slim-type threaded connection with a box outer diameter substantially equal to the outer diameter of the pipe body of the oil-well pipe is often referred to as flush-type threaded connection. A slim-type threaded connection with a box outer diameter slightly larger than the outer diameter of the pipe body of the oil-well pipe is often referred to as semi-flush-type threaded connection. These slim-type threaded connections are not only required to have high strength and sealability, but are also subject to tight size restrictions for their various portions to allow their thread and seal structures to be positioned in a limited pipe-wall thickness.

Patent Document 1 discloses a coupling-type threaded connection that is not a slim-type one. In a connection that is not a slim-type one, the wall thicknesses of both the pin and box portions that are located near the inner seal on the outer periphery of the pin tip can have sufficient magnitudes such that the inner seal alone can provide sufficient sealability against internal and external pressures, which is why no outer seal is provided in the threaded connection disclosed by Patent Document 1.

US 2005/248153 discloses a threaded joint for steel pipes comprises a pin and a box. The pin has male thread, a sealing surface, and a shoulder surface located on the end face of the pin. Correspondingly, the box has female thread, a sealing surface, and a shoulder surface which can mate or contact with the corresponding portions of the pin. The shoulder surface of the pin is provided at an end face of the pin. The sealing surface of the pi is located on a pipe end side near the male thread. A a nose portion is provided on the pin between the sealing surface and the shoulder surface, the nose portion being not in contact with a corresponding portion of the box.

### PRIOR ART DOCUMENTS

### PATENT DOCUMENTS

[Patent Document 1] JP 2013-29174 A
[Patent Document 2] WO 2017/213048
[Patent Document 3] WO 2018/135536
[Patent Document 4] WO 2007/017082

### SUMMARY OF THE INVENTION

In a slim-type threaded connection, the pin portions near the inner seal provided on the outer periphery of the pin near the tip of the pin have small wall thicknesses, making it difficult to ensure sealability against external pressure by virtue of the inner seal; in view of this, as disclosed in Patent Documents 2 to 3, an outer seal is often provided on the outer periphery of the basement of the pin and on the inner periphery of the tip of the box. Although the box portions near the outer seal have relatively small wall thicknesses, sealability against external pressure can be ensured because an external pressure acting on the outer periphery of the box improves the contact pressure between the outer sealing surfaces. Similarly, although the pin portions near the inner seal have relatively small wall thicknesses, sealability against internal pressure can be ensured because an internal pressure acting on the inner periphery of the pin improves the contact pressure between the inner sealing surfaces.

Patent Document 2 discloses an integral slim-type threaded connection. In this threaded connection, outer shoulder surfaces are provided on the basement of the pin and on the tip of the box. In this outer-shoulder construction, each outer shoulder surface needs to be provided within the wall thickness of the steel pipe; if the outer shoulder surface is to provide a radial dimension that provides sufficient torque resistance and compression-load resistance, it is difficult to provide a radial width that allows the formation of a tapered thread and/or a certain pin wall thickness as measured at the inner seal.

Patent Document 3 discloses an integral slim-type threaded connection. This threaded connection has a two-step threaded construction with threaded portions located forward and rearward of intermediate shoulders. To provide a sufficient wall thickness for the inner male-threaded portion (13) of the pin closer to its tip than the intermediate shoulder (15), pin regions including the inner male-threaded portion are processed to reduce its diameter. Thus, the inner diameter of the pin tip is smaller than the inner diameter of the steel pipe including the box, thus forming a stepped portion between the inner peripheral surface of the steel pipe including the box and the inner peripheral surface of the steel pipe including the pin. It would be preferable to have no such stepped portion, since such a stepped portion may would cause turbulences in the flow of fluid inside the pipe.

Patent Document 4, in its FIG. 7, discloses an integral slim-type threaded connection including inner shoulder surfaces (8, 9), inner sealing surfaces (10, 12), threaded portions (3, 4), outer sealing surfaces (34, 35) and outer shoulder surfaces (32, 33). If both an inner shoulder and an outer shoulder are provided within the wall thickness of a steel pipe and, at the same time, it is ensured that each threaded portion, constituted by a tapered thread, has an axial length that provides the required strength, this means that the taper angle of the tapered thread is small and the amount of work for thread-tightening rotation required to complete tightening is large, deteriorating the efficiency of make-up work.

Patent Document 4, at page 13, lines 7 to 9, discusses the possibility to omit the inner shoulder surfaces (8, 9) and inner sealing surfaces (10, 12) and housing (7). In this case, the resulting arrangement is similar to that of the threaded connection disclosed in Patent Document 2, and similar problems are inherent.

An object of the present disclosure is to provide a slim-type threaded connection with good sealability against internal and external pressures and with good strength against compression loads that can maintain its sealability against external pressure even when loads are applied repeatedly.

To provide a sufficient contact area between shoulder surfaces and radial widths that allows the formation of threaded portions even in a slim-type threaded connection, the present inventors considered positioning a torque shoulder on the tip of the pin and positioning inner and outer seals located forward and rearward of the threaded portions.

However, in case of a torque shoulder positioned on the tip of the pin, comparing with a torque shoulder positioned on the tip of the box, cross-sectional area near the torque shoulder is smaller due to its smaller average diameter even with the same radial shoulder width, which causes reduced compression-load resistance.

In view of this, the present inventors considered an arrangement where, upon application of a compression load, the pin and box are deformed within the range of elasticity to cause the stab flanks of the male and female threads to contact each other to make the stab flanks bear some of the compression load. However, it was found that, as the axial load acting on the stab flank of the female thread of the box increases, the opening on the tip of the box tries to deform to reduce its diameter and, when the pin is pushed into the box, the pin outer sealing surface forces the box outer sealing surface to be enlarged radially outwardly such that damage can easily be accumulated in box portions near the outer sealing surface.

In a slim-type threaded connection with the above-discussed construction, reducing damage generated in box portions near the outer sealing surface upon application of a compression load requires minimizing the amount of axial movement of the pin pushed into the box upon application of the compression load. Thus, the present inventors focused on torque shoulder angle. Generally, a torque shoulder angle of about -15° has been thought to be preferable based on the hope that the box may hold the pin tip. However, in a slim-type threaded connection with the above-discussed construction considered by the present inventors, some of the compression load is borne by the threaded portions, and thus the compression load acting on the pin tip is small. Rather, it is thought to be preferable if the pin tip cannot easily be deformed to expand radially outwardly and thus limits the amount of axial movement of the pin relative to the box upon application of the compression load.

The inventors arrived at the present disclosure based on these findings. The invention is defined in the claims.

A threaded connection according to the present disclosure may be a threaded connection including a tubular pin and a tubular box, the pin and the box being made up as the pin is screwed into the box.

The pin may include: a male thread provided on an outer periphery of the pin and constituted by a tapered thread with a diameter gradually decreasing toward a tip; a pin inner sealing surface provided on the outer periphery of the pin and located further toward the tip than the male thread; a nose located further toward the tip than the pin inner sealing surface and having an outer peripheral surface smoothly contiguous to the pin inner sealing surface; a torque shoulder surface formed by a tip face of the nose; and a pin outer sealing surface provided on the outer periphery of the pin and located further toward a basement than the male thread.

The box may include: a female thread provided on an inner periphery of the box and adapted to be in engagement with the male thread when the connection is made up; a box inner sealing surface provided on the inner periphery of the box and adapted to be in contact with the pin inner sealing surface when the connection is made up; a threadless portion having an inner peripheral surface facing the outer peripheral surface of the nose such that these surfaces are arranged in a radial direction and leave a clearance when the connection is made up; a torque shoulder surface facing the torque shoulder surface of the pin such that these surfaces are arranged in an axial direction, the torque shoulder surface being in contact with the torque shoulder surface of the pin when the connection is made up; and a box outer sealing surface provided on the inner periphery of the box and adapted to be in contact with the pin outer sealing surface when the connection is made up.

The male thread and the female thread may be constructed such that, when the connection is made up, a clearance is formed between a stab flank of the male thread and a stab flank of the female thread when no axial compression load is applied and, when a predetermined axial compression load acts on the threaded connection, the pin and the box elastically deform such that the stab flank of the male thread and the stab flank of the female thread come into contact such that some of the axial compression load is transmitted between these stab flanks.

The pin outer sealing surface and the box outer sealing surface may be shaped such that, when the pin as made up on the box is pushed into the box by an axial compression load in a direction of the tip, the box outer sealing surface increases its diameter. The taper angle of the pin outer sealing surface and/or the box outer sealing surface may be larger than the thread taper angle of the male and female threads. For example, if the degree of inclination of the thread taper is 1/6, the degree of inclination of the taper of the outer sealing surface may be 1/4. The degree of inclination of a taper is the amount of diametrical displacement relative to the length in the axial direction (amount_of_diametrical_displacement/axial_length). The taper angle is represented by arctan(degree_of_inclination_of_taper/2).

Preferably, a shoulder angle is not smaller than 0° and smaller than 10°, the shoulder angle being defined as the angle formed by a plane perpendicular to the pipe axis and a straight line passing through a radially outer edge and a radially inner edge of the torque shoulder surface of the box as viewed in a longitudinal cross section, where a positive angle means that the radially outer edge is located further toward the tip than the radially inner edge.

The present disclosure provides a slim-type threaded connection with good sealability against internal and external pressures and with good strength against compression loads that can maintain sealability against external pressure even when loads are applied repeatedly.

### BRIEF DESCRIPTION OF THE DRAWINGS

[FIG. 1] FIG. 1 is a longitudinal cross-sectional view of an entire threaded connection for oil-well pipe according to an embodiment as made up.
[FIG. 2] FIG. 2 is an enlarged longitudinal cross-sectional view of portions of the threaded connection including and near the outer seals.
[FIG. 3] FIG. 3 is an enlarged longitudinal cross-sectional view of a thread of the threaded connection as in engagement.
[FIG. 4] FIG. 4 is an enlarged longitudinal cross-sectional view of portions of the threaded connection including and near the pin tip.
[FIG. 5] FIG. 5 is a graph showing results of numerical analysis simulations by means of the elasto-plastic finite element method, showing the relationship between shoulder angle and the smallest evaluation value of the contact pressure between the outer sealing surfaces upon application of repeated complex loads.

### EMBODIMENTS FOR CARRYING OUT THE INVENTION

The threaded connection according to the present embodiment is a threaded connection including a tubular pin and a tubular box having an opening for receiving the pin, where the pin and box are made up as the pin is screwed into the box. The pin may be provided on an end of a long-length pipe, such as an oil-well pipe. The box may be provided on an end of a coupling or on an end of another long-length pipe. In preferred embodiments, the pin is provided on an end of a long-length pipe, while the box is provided on an end of a coupling. The long-length pipe and coupling may be made of a metal, such as steel, e.g. stainless steel, or a nickel-base alloy.

The threaded connection includes a pipe including a pipe body and the pin provided on an end of the pipe body, and a tubular coupling for connecting the pipe with another pipe, where the coupling may include a pipe body and the box provided on an end of the pipe body. In such implementations, an outer diameter of the pipe body and box of the coupling may be not smaller than 100 % and not larger than 105 % of an outer diameter of the pipe body of the pipe, and an inner diameter of the pipe body of the coupling may be not smaller than 90 % and smaller than 100 % of an inner diameter of the pipe body of the pipe. In implementations where the inner diameter of the pipe body of the coupling is smaller than the inner diameter of the pipe body of the pipe, it is preferable that the pin portions including and near the pin tip (i.e. nose, as discussed further below) have been processed to reduce the diameter of their inner periphery to be equal to the diameter of the inner periphery of the pipe body of the coupling. In an oil-well pipe, the inner diameter of the pipe body of the coupling may be larger than the drift diameter as specified by the API standards.

The pin may include a male thread provided on the outer periphery of the pin. This male thread may be a tapered thread with a diameter gradually decreasing toward the tip. The pin may include a pin inner sealing surface provided on the outer periphery of the pin and located further toward the tip than the male thread. The pin may include a nose located further toward the tip than the pin inner sealing surface, where this nose may include an outer peripheral surface smoothly contiguous to the pin inner sealing surface. The pin may include a torque shoulder surface formed by the tip face of the nose. The pin may include a pin outer sealing surface provided on the outer periphery of the pin and located further toward the basement than the male thread.

The box may include a female thread constituted by a tapered thread provided on the inner periphery of the box. The female thread is a tapered thread with a diameter gradually increasing toward the opening end of the box, and has a thread profile complementary with that of the male thread. The female thread is in engagement with the male thread when the connection is made up. The box may include a box inner sealing surface provided on the inner periphery of the box and located further toward the tip of the pin than the female thread, where the box inner sealing surface is in contact with the pin inner sealing surface when the connection is made up. The box may include a threadless portion having an inner peripheral surface facing the outer peripheral surface of the nose such that these surfaces are arranged in a radial direction and leave a clearance when the connection is made up. The threadless portion is located further toward the tip of the pin than the box inner sealing surface. The box may include a torque shoulder surface facing the torque shoulder surface of the pin such that these surfaces are arranged in the axial direction, where the box's torque shoulder surface is in contact with the torque shoulder surface of the pin when the connection is made up. That is, if the connection is made up, the torque shoulder surfaces of the pin and box are in contact with each other even when no compression loads in the axial direction are applied. Preferably, a radially inner edge of the torque shoulder surface of the box may be an edge of the inner peripheral surface of the pipe body of the coupling or steel pipe including the box. The box may include a box outer sealing surface provided on the inner periphery of the box and located further toward the opening end of the box than the female thread, where the box outer sealing surface is in contact with the pin outer sealing surface when the connection is made up. The box may further include an outer nose extending from the box outer sealing surface toward the tip (i.e., open end) of the box and, in such implementations, the outer nose provides the open end of the box. A clearance may be formed between the inner periphery of the outer nose and the portion of the pin outer periphery that faces it.

Each of the male and female threads may be a buttress thread, or may be a wedge thread with a dovetailed longitudinal cross-sectional shape and with a thread width gradually decreasing along the helical direction of the thread as it goes toward the tip, or may be any other appropriate thread.

The male and female threads may be constructed such that, when the connection is made up, the load flank of the male thread and the load flank of the female thread are in contact with each other and a clearance is formed between the stab flank of the male thread and the stab flank of the female thread when no axial compression load is applied. Preferably, the male and female threads may be constructed such that, when the connection is made up, the thread root of the male thread and the thread crest of the female thread are in contact with each other and, at the same time, a clearance is formed between the thread crest of the male thread and the thread root of the female thread. Alternatively, the male and female threads may be constructed such that the thread crest of the male thread and the thread root of the female thread are in contact with each other and a clearance is formed between the thread root of the male thread and the thread crest of the female thread. In these constructions, the thread groove of the pin or the thread groove of the box may have a small depth, ensuring that the pin critical cross section or box critical cross section has a large area, thereby maximizing the tensile load resistance of the threaded connection.

Further, the male and female threads may be constructed such that, when a predetermined axial compression load acts on the threaded connection, the pin and box elastically deform such that the stab flank of the male thread and the stab flank of the female thread come into contact such that some of the axial compression load is transmitted between these stab flanks. Elastic deformation of the pin and box means elastic deformation without the pin-box make-up structure yielding as a whole, and also means that yield occurs locally, for example, in a surface layer of a corner portion at the base of the thread.

The predetermined axial compression load may be any amount of load that causes the pin and box to elastically deform such that the stab flanks of the male and female threads may come into contact, and an example serving as a guide for design may be Lc=Ly×JE, where Lc is the axial compression load, Ly is the yield compression load of the pipe body of the steel pipe provided with the pin, and JE is the joint efficiency of the threaded connection. The joint efficiency JE is defined as the ratio of the smaller one of the pin's critical cross section A_{PCCS} and the box's critical cross section A_{BCCS} relative to the cross section Ap of the pipe body of the long-length pipe (i.e. A_{PCCS}/Ap or A_{BCCS}/Ap). It is preferable that the joint efficiency JE be 75 % or higher.

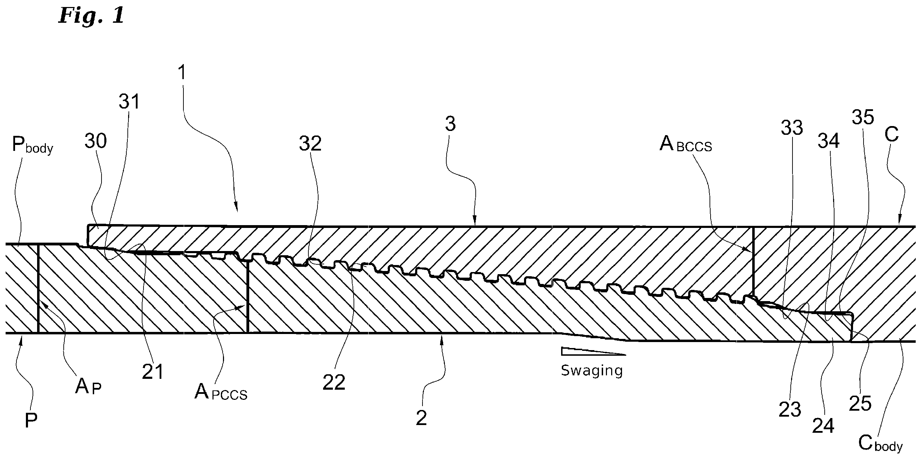

As shown in FIG. 1, the critical cross section A_{PCCS} of the pin is the area of a transverse section of the pin containing the thread root of the male thread at that one of the ends of the region of engagement between the male and female threads which is located closer to the basement (i.e. closer to the pipe body of the pin) when the connection is made up. The critical cross section A_{BCCS} of the box is the area of a transverse section of the box containing the thread root of the female thread at that one of the ends of the region of engagement between the male and female threads which is located closer to the basement (i.e. closer to the pipe body of the box) when the connection is made up. Each of the critical cross-sectional areas of the pin and box may be the cross-sectional area that excludes the cross-sectional area of the thread of the male or female thread. Further, it is preferable that the stab flanks of the male and female threads already begin to be in contact at a time point at which an axial compression load smaller than Lc above acts, following the elastic deformation of the pin and box.

The pin and box outer sealing surfaces may be shaped such that, when the pin as fastened on the box is pushed into the box by an axial compression load slightly in the direction of the tip, the box sealing surface is expanded in diameter. For example, each of the pin and box outer sealing surfaces may have a taper shape with a diameter gradually decreasing toward the tip of the pin. Alternatively, the pin outer sealing surface may have a taper shape with a diameter gradually decreasing toward the tip of the pin, while the box outer sealing surface may be shaped as a convex curved surface that is in contact with the pin outer sealing surface. Alternatively, the box outer sealing surface may have a taper shape with a diameter gradually decreasing toward the tip of the pin, while the pin outer sealing surface may be shaped as a convex curved surface that is in contact with the box outer sealing surface. Alternatively, each of the pin and box outer sealing surfaces may be shaped as a convex curved surface that causes the box sealing surface to expand in diameter when the pin is pushed into the box in the direction of the tip. Alternatively, at least one of the pin and box outer sealing surfaces may be shaped as a complex surfaces including a tapered portion and a curved portion.

It is preferable that the radially outer edge of the torque shoulder surface of each of the box and pin as viewed in a longitudinal cross section be located further toward the tip than the radially inner edge of that torque shoulder surface. This will prevent the nose of the pin from deforming radially inwardly upon application of an axial compression load. Further, it is preferable that the shoulder angle, defined as the angle formed by a plane perpendicular to the pipe axis and a straight line passing through the radially outer and inner edges of the torque shoulder surface of each of the box and pin, be not smaller than 0° and smaller than 10°. More preferably, this shoulder angle is not larger than 7.5°. Yet more preferably, the shoulder angle is not smaller than 4.5° and not larger than 5°.

In the threaded connection according to the present embodiment, a nose is provided between the pin inner sealing surface and the torque shoulder of the pin; thus, even when an excessive compression load is applied to deform the shoulders, its effects on the contact conditions between the inner sealing surfaces will be small, and thus internal sealability will be maintained even when an excessive compression load is applied.

Further, since a nose is provided to form a tip portion of the pin and a torque shoulder surface is formed by the tip face of this nose, the opening end of the box does not need to be accommodated within the wall thickness of the pipe body of the long-length pipe provided with the pin (hereinafter referred to as "pin pipe body"), as is the case with the threaded connection disclosed by Patent Document 2; the outer diameter of the opening end of the box may be somewhat larger than the outer diameter of the pin pipe body to provide a sufficient wall thickness for box portions including and near the outer sealing surface and a sufficient wall thickness for pin portions including and near the inner sealing surface and, at the same time, ensure that the portions to be provided with tapered threads constituting the male and female threads have relatively large radial dimensions. Further, the diameter of the inner periphery of the pin tip does not need to be smaller than the diameter of the inner periphery of the pipe body of the long-length pipe or coupling provided with the box (hereinafter referred to as "box pipe body") for the purpose of providing a sufficient wall thickness for pin portions including and near the inner sealing surface, and these diameters may be equal to prevent a large step between the inner peripheral surface of the pin tip and the inner peripheral surface of the box pipe body.

Further, since a clearance is formed between the stab flank of the male thread and the stab flank of the female thread when the connection is made up and when no axial compression load is applied, galling cannot easily occur between the male and female threads during make-up.

Further, when a predetermined axial compression load is applied, some of the compression load is borne by the stab flank of the female thread on the box, thereby providing the required compression load resistance even if the nose provided with the torque shoulder surface of the pin has a relatively small cross-sectional area.

When some of the compression load acts on the stab flank of the female thread, an internal stress is generated that deforms the box to reduce the diameter of portions including and near the box outer sealing surface. As the shoulder angle of the torque shoulder surface of each of the pin and box is a predetermined angle in the range not smaller than 0° and smaller than 10°, the nose is prevented from deforming radially outwardly along the torque shoulder surface and increasing its diameter. The reduction in the deformation of the nose means a reduction in the amount of axial movement of the pin relative to the box caused by the compression load, reducing the amount of increase in the diameter of the box outer sealing surface forced by the pin outer sealing surface. This will prevent accumulation of relatively large damage to the box upon application of compression loads, thereby helping maintain the external sealability even when subsequent axial tensile loads are applied.

In a typical threaded connection, to prevent galling, a surface treatment such as chemical conversion or plating is often performed on the surfaces of threads and/or sealing surfaces of one or both of the pin and box. In an integral threaded connection, surface treatment needs to be performed on the pin or box provided on an end of a long-length pipe, which requires large-scale equipment. Further, in a typical integral threaded connection, before the formation of a box by machining, cold working is often performed on a metallic long-length pipe to expand a predetermined axial range thereof, starting at the pipe end, to increase its diameter, which not only requires large-scale equipment, but also increases the number of process steps, leading to an increase in process costs to create the box.

In contrast, if the threaded connection according to the present disclosure is implemented as a coupling-type slim-type threaded connection, surface treatment can easily be performed since the coupling is short in length. Further, producing in advance a coupling raw tube with predetermined outer and inner diameters makes it possible to omit the process for expanding the raw tube in diameter. Another advantage is that a sufficient radial dimension of the torque shoulder surface can easily be provided as the inner diameter of the pipe body of the coupling is somewhat smaller than the inner diameter of the long-length pipe.

### [Construction of Threaded Connection for Oil-Well Pipe]

Referring to FIG. 1, a threaded connection for oil-well pipe according to the present embodiment, denoted as 1, is a coupling-type threaded connection including a long-length oil-well pipe P having a tubular pin 2 and a short-length coupling C having a tubular box 3. Both the oil-well pipe P and coupling C may be made of steel. Each of the coupling C's ends as determined along the axial direction is provided with a box 3, and a pair of oil-well pipes P are connected with each other via a coupling C.

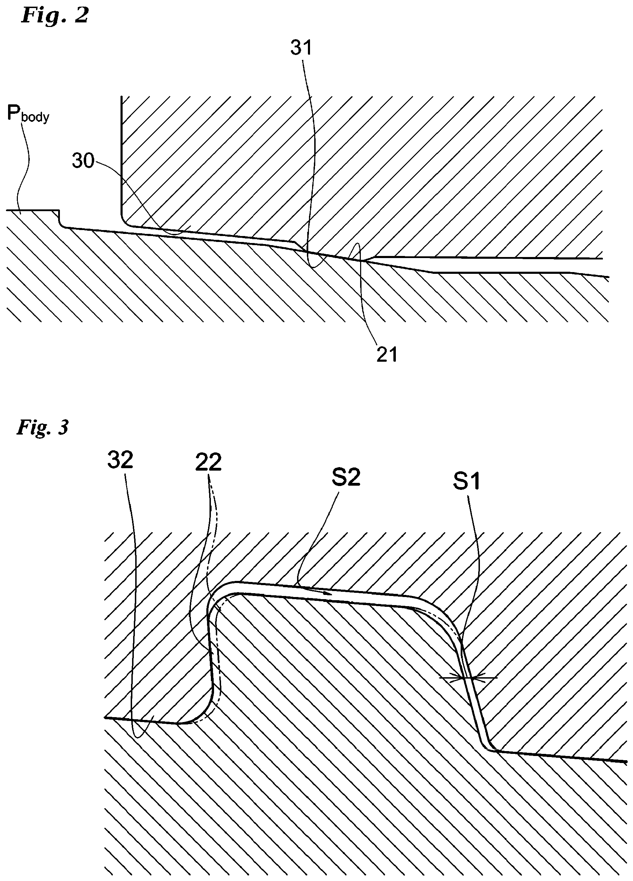

The pin 2 extends from the end of the pipe body P_{body} of the oil-well pipe P along the axis of the pipe, where the direction of the extension (i.e. direction to the right in FIG. 1) may also be referred to as direction of the tip of the pin 2. As shown in detail in FIGS. 2 to 4, on the outer periphery of the pin 2 are provided, starting from the pipe body P_{body} toward the tip, a pin outer sealing surface 21, a male thread 22 constituted by a tapered thread with a diameter gradually decreasing toward the tip, a pin inner sealing surface 23, and a nose 24. The tip face of the nose 24 functions as a torque shoulder surface 25.

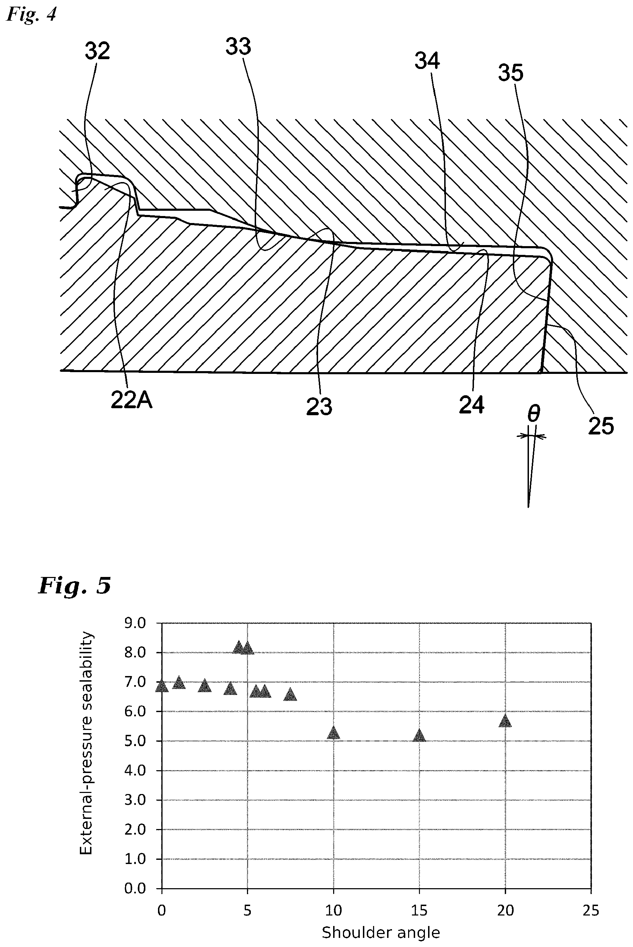

In the threaded connection 1 of the shown embodiment, the pin outer sealing surface 21 is constituted by a taper surface with a diameter gradually decreasing toward the tip, as shown in FIG. 2. The degree of inclination of the taper of the pin outer sealing surface 21 is 1/4. As shown in FIG. 3, the male thread 22 is constituted by a thread with a trapezoidal longitudinal cross-sectional shape, having a load flank 22L with a negative flank angle and a thread crest and a thread root each shaped as a slope with a diameter gradually decreasing toward the tip as viewed in a longitudinal cross section. As shown in FIG. 4, a portion of the male thread 22 located furthest toward the tip is shaped as an imperfect-thread portion 22A. The pin inner sealing surface 23 is constituted by a taper surface with a diameter gradually decreasing toward the tip. The nose 24 has an outer peripheral surface that is smoothly contiguous to the pin inner sealing surface 23. Further, as shown in FIG. 1, portions of the pin 2 extending between the tip of the pin 2 and a position halfway through the region provided with the male thread 22 are processed to reduce their diameter such that the inner periphery of the portions provided with the pin inner sealing surface 23 and the inner periphery of the nose 24 have slightly smaller diameters than the inner periphery of the pin pipe body P_{body}.

The box 3 extends from the end of the pipe body C_{body} of the coupling C along the axis of the box, where the direction of the extension (i.e. direction to the left in FIG. 1) may also be referred as direction of the tip of the box 3. The direction of the tip of the box 3 may herein also be referred to as direction of the opening end. On the outer periphery of the box 3 are provided, starting from the tip of the box toward the pipe body C_{body} of the coupling C, an outer nose 30, a box outer sealing surface 31 corresponding to the pin outer sealing surface 21, a female thread 32 corresponding to the male thread 22, a box inner sealing surface 33 corresponding to the pin inner sealing surface 21, a threadless portion 34 corresponding to the nose 24, and a torque shoulder surface 35 corresponding to the torque shoulder surface 25 of the pin 2.

The outer nose 30 is a box portion extending from the box outer sealing surface 31 in the direction of the tip of the box 3, where the outer nose 30 provides the opening end of the box 3. A clearance is formed between the inner periphery of the outer nose 30 and the portion of the pin outer periphery that faces it.

The box outer sealing surface 31 is constituted by a convex curved surface protruding radially inwardly.

The female thread 32 is constituted by a tapered thread compatible with the male thread. The flank angle of the load flank of the male thread 22 and female thread of the embodiment shown is -5°, and the flank angle of the stab flank is 15°. A negative flank angle of a load flank means that, at the load flank, the crest of the thread overhangs relative to the base of the thread. In the shown embodiment, when the connection is made up as shown in FIG. 3, the load flank of the male thread 22 and the load flank of the female thread 32 are in contact with each other, while a small clearance S1 is formed between the stab flank of the male thread 22 and the stab flank of the female thread 32. The axial dimension of the clearance S1 may be about 0.1 mm, for example. The clearance S1 may have such a size that, when the axial compression load Lc discussed above acts on the pin 2 and box 3 as made up, the pin 2 is pushed into the box 3 such that the stab flanks of the male and female threads 22 and 32 are in contact with each other, as suggested by the phantom line in FIG. 3. Further, when the connection is made up, the thread root of the male thread 22 and the thread crest of the female thread 32 are in contact with each other, while a clearance S2 is formed between the thread crest of the male thread 22 and the thread root of the female thread 32.

As shown in FIG. 4, the box inner sealing surface 33 is constituted by a convex curved surface protruding radially inwardly.

The threadless portion 34 and torque shoulder surface 35 form a recess in the inner periphery of the box for holding the nose 24 of the pin 2. The inner peripheral surface of the threadless portion 34 is a cylindrical surface that is smoothly contiguous to the box inner sealing surface 33, and a clearance is formed between the inner periphery of the threadless portion 34 and the nose 24.

The torque shoulder surface 35 faces the torque shoulder surface 25 of the pin 2 such that these surfaces are arranged in the axial direction. It is preferable that each of these torque shoulders 25 and 35 be constituted by a substantially flat ring-shaped surface. That is, it is preferable that each of the torque shoulder surfaces 25 and 35 has a longitudinal cross-sectional shape that is described as a single straight line generally perpendicular to the pipe axis. Further, if the shoulder angles θ of the torque shoulder surfaces 25 and 35 of the pin 2 and box 3 are equal to each other, this will prevent the contact pressure in some areas from becoming excessive during make-up and causing galling.

The radially outer edge of each of the torque shoulders 25 and 35 slightly protrudes further in the direction of the tip of the pin 2 than the radially inner edge. The shoulder angle θ, defined as the angle formed by a plane perpendicular to the pipe axis and a plane represented by a straight line passing through points representing the radially outer and inner edges of the torque shoulder surface 25 or 35, is 5° in the shown embodiment.

The present disclosure can be applied to not only a coupling-type threaded connection, but also to an integral threaded connection. Further, each thread may be a trapezoidal thread, an API round thread, an API buttress thread, or a wedge thread. Furthermore, each of the torque shoulder surfaces of the pin and box may be constituted by two or more sub-surfaces with different angles relative to a plane perpendicular to the pipe axis. Otherwise, the present disclosure is not limited to the above-illustrated embodiment, and various modifications are possible without departing from the scope of the Claims.

### EXAMPLES

To verify the effects of the threaded connection for oil-well pipe according to the present embodiment, simulations by numerical analysis by the elasto-plastic finite element method were performed.

### <Test Conditions>

A plurality of specimens (analysis models) of the coupling-type threaded connection for oil-well pipe shown in FIGS. 1 to 4 where only the shoulder angle θ of the torque shoulder surfaces 25 and 35 varied were created, and elasto-plastic finite element analysis was performed on each of the specimens and a comparison was made between the different outer seal performances of the outer sealing surfaces 21 and 31. The values of shoulder angle θ of the various specimens were 0.0°, 1.0°, 2.5°, 4.0°, 4.5°, 5.0°, 5.5°, 6.0°, 7.5°, 10°, 15° and 20°.

The test conditions common to all the specimens are as follows.

### <Size of Oil-Well Pipes>

Outer diameter of pipe body of oil-well pipe: 355.6 mm; wall thickness of pipe body: 20.62 mm

### <Grade of Oil-Well Pipe>

Oil-well pipe material Q125 in accordance with API standards (low-alloy steel with a nominal yield stress of 125 ksi)

The finite element analysis used models of specimens each made of an isotropically hardened elasto-plastic body with an elastic modulus of 210 GPa and with a yield strength of 125 ksi (861.9 MPa) for 0.2 % a proof stress.

### <Thread Profile >

Thread pitch: 6.35 mm; flank angle of load flank: -5°; flank angle of stab flank: 15°; clearance between stab flanks S1: 0.09 mm; thread taper: 1/6

### <Coupling Profile>

Outer diameter: 365.3 mm (102.7 % of outer diameter of pipe body of oil-well pipe)

### <Joint Efficiency>

$Joint efficiency JE = {A}_{BCCS} / {A}_{P} = 79.3 %$

### <Evaluation Method>

First, each specimen, as made up, was simulated and analyzed, before repeated complex loads simulating the Series A tests defined in ISO 13679:2011 were applied to the specimens, and evaluation values were calculated by dividing, by the external pressure under each load condition of the repeated complex loading, the contact force per unit circumferential length between the outer sealing surfaces 21 and 31 under that load condition, and the smallest one of the evaluation values for each specimen was taken and used as an evaluation indicator of sealability, and these values were compared for evaluation. A larger smallest evaluation value means a better external-pressure sealability.

### <Evaluation Results>

As will be apparent from the graph of FIG. 5, the smallest evaluation values for specimens with a shoulder angle of 10° or larger were below 6.0, while the smallest evaluation values for specimens with shoulder angles below 10° were above 6.5, which means good results. Especially the specimens with shoulder angles of 4.5° and 5.0° produced very good results, where the smallest evaluation value exceeded 8.0. It was thus verified that the optimum range of shoulder angle in the coupling-type slim-type threaded connection according to the present embodiment is not smaller than 4.5° and not larger than 5.0°.

Good results were produced when the shoulder angle was below 10° because, as discussed above, when a simple compression load is applied, the amount of movement of the pin outer sealing surface pushed against the box outer sealing surface is small and the internal stress that radially inwardly deforms the opening end of the box to reduce its diameter is also small, thereby reducing damage accumulated in box portions near the outer sealing surface of the box.

The external-pressure sealability was at its maximum for shoulder angles of 4.5° to 5° presumably because, for shoulder angles below 4.5°, the compression load caused the box shoulder to deform such that the radially inner edge of the box shoulder expanded, thus becoming unable to support the nose of the pin.

### REFERENCE SIGNS LIST

1: threaded connection
P: pipe; P_{body}: pipe body; 2: pin
21: pin outer sealing surface; 22: male thread; 23: pin inner sealing surface
24: nose; 25: torque shoulder surface
C: coupling; C_{body}: pipe body; 3: box
31: box outer sealing surface; 32: female thread; 33: box inner sealing surface
34: threadless portion; 35: torque shoulder surface

## Claims

1. A threaded connection (1) including a tubular pin (2) and a tubular box (3), the pin (2) and the box (3) being made up as the pin (2) is screwed into the box (3),
the pin (2) including: a male thread (22) provided on an outer periphery of the pin (2) and constituted by a tapered thread with a diameter gradually decreasing toward a tip; a pin inner sealing surface (23) provided on the outer periphery of the pin (2) and located further toward the tip than the male thread (22); a nose (24) located further toward the tip than the pin inner sealing surface (23) and having an outer peripheral surface smoothly contiguous to the pin inner sealing surface (23); a torque shoulder surface (25) formed by a tip face of the nose (24); and a pin outer sealing surface (21) provided on the outer periphery of the pin (2) and located further toward a basement than the male thread (22),
the box (3) including: a female thread (32) provided on an inner periphery of the box (3) and adapted to be in engagement with the male thread (22) when the connection is made up; a box inner sealing surface (33) provided on the inner periphery of the box (3) and adapted to be in contact with the pin inner sealing surface (23) when the connection is made up; a threadless portion (34) having an inner peripheral surface facing the outer peripheral surface of the nose (24) such that these surfaces are arranged in a radial direction and leave a clearance when the connection is made up; a torque shoulder surface (35) facing the torque shoulder (25) surface of the pin (2) such that these surfaces are arranged in an axial direction, the torque shoulder surface (35) being in contact with the torque shoulder surface (25) of the pin (2) when the connection is made up; and a box outer sealing surface (31) provided on the inner periphery of the box (3) and adapted to be in contact with the pin outer sealing surface (21) when the connection is made up,
wherein the male thread (22) and the female thread (33) being constructed such that, when the connection is made up, a clearance is formed between a stab flank of the male thread (22) and a stab flank of the female thread (32) when no axial compression load is applied and, when a predetermined axial compression load acts on the threaded connection, the pin (2) and the box (3) elastically deform such that the stab flank of the male thread (22) and the stab flank of the female thread (32) come into contact such that some of the axial compression load is transmitted between these stab flanks,
the pin outer sealing surface (21) and the box outer sealing surface (31) being shaped such that, when the pin (2) as made up on the box (3) is pushed into the box (3) by an axial compression load in a direction of the tip, the box outer sealing surface (31) increases its diameter,
wherein a shoulder angle is not smaller than 0° and smaller than 10°, the shoulder angle being defined as the angle formed by a plane perpendicular to the pipe axis and a straight line passing through a radially outer edge and a radially inner edge of the torque shoulder surface (35) of the box (3) as viewed in a longitudinal cross section, where a positive angle means that the radially outer edge is located further toward the tip than the radially inner edge.

2. The threaded connection (1) according to claim 1, wherein the shoulder angle is not larger than 7.5°.

3. The threaded connection (1) according to claim 1, wherein the shoulder angle is not smaller than 4.5° and not larger than 5°.

4. The threaded connection (1) according to claim 1, 2 or 3, wherein the box (3) is constructed such that a load acting on the stab flank of the female thread (32) generates an internal stress that deforms the box (3) to reduce a diameter of a portion including and near the box outer sealing surface (31).

5. The threaded connection (1) according to any one of claims 1 to 4, including a pipe (P) including a pipe body (P_{body}) and the pin (2) provided on an end of the pipe body (P_{body}), and a tubular coupling (C) for connecting the pipe (P) with another pipe, the coupling (C) including a pipe body (C_{body}) and the box (3) provided on an end of the pipe body (C_{body}),
wherein an outer diameter of the pipe body (C_{body}) and box (3) of the coupling (C) is not smaller than 100 % and not larger than 105 % of an outer diameter of the pipe body (P_{body}) of the pipe (P), and an inner diameter of the pipe body (C_{body}) of the coupling (C) is not smaller than 90 % and smaller than 100 % of an inner diameter of the pipe body (P_{body}) of the pipe (P).

## Patentansprüche

1. Gewindeverbindung (1) einschließlich eines rohrförmigen Stifts (2) und eines rohrförmigen Gehäuses (3), wobei der Stift (2) und das Gehäuse (3) gebildet werden, wenn der Stift (2) in das Gehäuse (3) geschraubt wird,
wobei der Stift (2) Folgendes einschließt: ein Außengewinde (22), das auf einem äußeren Umfang des Stifts (2) bereitgestellt ist und durch ein verjüngtes Gewinde mit einem Durchmesser, der schrittweise zu einer Spitze hin abnimmt, gebildet ist; eine Stiftinnenabdichtungsfläche (23), die auf dem äußeren Umfang des Stifts (2) bereitgestellt ist und weiter zu der Spitze hin liegt als das Außengewinde (22); eine Nase (24), die weiter zu der Spitze hin liegt als die Stiftinnenabdichtungsfläche (23) und eine äußere Umfangsfläche aufweist, die glatt an die Stiftinnenabdichtungsfläche (23) angrenzt; eine Drehmomentschulterfläche (25), die durch eine Spitzenseite der Nase (24) gebildet ist; und eine Stiftaußenabdichtungsfläche (21), die auf dem äußeren Umfang des Stifts (2) bereitgestellt ist und weiter zu einem Boden hin liegt als das Außengewinde (22),
wobei das Gehäuse (3) Folgendes einschließt: ein Innengewinde (32), das auf einem inneren Umfang des Gehäuses (3) bereitgestellt ist und eingerichtet ist, um mit dem Außengewinde (22) in Eingriff zu stehen, wenn die Verbindung hergestellt ist; eine Gehäuseinnenabdichtungsfläche (33), die auf dem inneren Umfang des Gehäuses (3) bereitgestellt ist und eingerichtet ist, um die Stiftinnenabdichtungsfläche (23) zu berühren, wenn die Verbindung hergestellt ist; einen gewindelosen Abschnitt (34), der eine innere Umfangsfläche aufweist, die der äußeren Umfangsfläche der Nase (24) zugewandt ist, so dass diese Flächen in einer radialen Richtung angeordnet sind und ein Spiel zurücklassen, wenn die Verbindung hergestellt ist; eine Drehmomentschulterfläche (35), die der Drehmomentschulterfläche (25) des Stifts (2) zugewandt ist, so dass diese Flächen in einer axialen Richtung angeordnet sind, wobei die Drehmomentschulterfläche (35) die Drehmomentschulterfläche (25) des Stifts (2) berührt, wenn die Verbindung hergestellt ist; und eine Gehäuseaußenabdichtungsfläche (31), die auf dem inneren Umfang des Gehäuses (3) bereitgestellt ist und eingerichtet ist, um die Stiftaußenabdichtungsfläche (21) zu berühren, wenn die Verbindung hergestellt ist,
wobei das Außengewinde (22) und das Innengewinde (33) so konstruiert sind, dass, wenn die Verbindung hergestellt ist, ein Spiel zwischen einer Einführflanke des Außengewindes (22) und einer Einführflanke des Innengewindes (32) gebildet wird, wenn keine axiale Komprimierungsbelastung aufgebracht wird, und, wenn eine vorgegebene axiale Komprimierungsbelastung auf die Gewindeverbindung wirkt, sich der Stift (2) und das Gehäuse (3) elastisch verformen, so dass sich die Einführflanke des Außengewindes (22) und die Einführflanke des Innengewindes (32) berühren, so dass ein Teil der axialen Komprimierungsbelastung zwischen diesen Einführflanken übertragen wird,
wobei die Stiftaußenabdichtungsfläche (21) und die Gehäuseaußenabdichtungsfläche (31) so geformt sind, dass, wenn der Stift (2), wie er auf dem Gehäuse (3) eingerichtet ist, durch eine axiale Komprimierungsbelastung in einer Richtung der Spitze in das Gehäuse (3) geschoben wird, wobei die Gehäuseaußenabdichtungsfläche (31) ihren Durchmesser vergrößert,
wobei ein Schulterwinkel nicht kleiner als 0 ° und kleiner als 10 ° ist, wobei der Schulterwinkel als der Winkel definiert ist, der durch eine Ebene senkrecht zu der Rohrachse und eine Gerade durch einen radial äußeren Rand und einen radial inneren Rand der Drehmomentschulterfläche (35) des Gehäuses (3) in einem Längsquerschnitt gebildet wird, wobei ein positiver Winkel bedeutet, dass der radial äußere Rand weiter zu der Spitze hin liegt als der radial innere Rand.

2. Gewindeverbindung (1) nach Anspruch 1, wobei der Schulterwinkel nicht größer als 7,5 ° ist.

3. Gewindeverbindung (1) nach Anspruch 1, wobei der Schulterwinkel nicht kleiner als 4,5 ° und nicht größer als 5 ° ist.

4. Gewindeverbindung (1) nach Anspruch 1, 2 oder 3, wobei das Gehäuse (3) so konstruiert ist, dass eine Belastung, die auf die Einführflanke des Innengewindes (32) agiert, eine innere Belastung erzeugt, die das Gehäuse (3) verformt, um einen Durchmesser eines Abschnitts einschließlich und in der Nähe der Gehäuseaußenabdichtungsfläche (31) zu verringern.

5. Gewindeverbindung (1) nach einem der Ansprüche 1 bis 4, die ein Rohr (P) einschließlich eines Rohrkörpers (P_{body}) und des Stifts (2), der an einem Ende des Rohrkörpers (P_{body}) bereitgestellt ist, und eine rohrförmige Kopplung (C) zum Verbinden des Rohrs (P) mit einem anderen Rohr einschließt, wobei die Kopplung (C) einen Rohrkörper (C_{body}) und das an einem Ende des Rohrkörpers (C_{body}) bereitgestellte Gehäuse (3) einschließt,
wobei ein Außendurchmesser des Rohrkörpers (C_{body}) und des Gehäuses (3) der Kopplung (C) nicht weniger als 100 % und nicht mehr als 105 % eines Außendurchmessers des Rohrkörpers (P_{body}) des Rohrs (P) beträgt und ein Innendurchmesser des Rohrkörpers (C_{body}) der Kopplung (C) nicht weniger als 90 % und weniger als 100 % eines Innendurchmessers des Rohrkörpers (P_{body}) des Rohrs (P) beträgt.

## Revendications

1. Raccord fileté (1) incluant une extrémité mâle tubulaire (2) et une extrémité femelle tubulaire (3), l'extrémité mâle (2) et l'extrémité femelle (3) étant assemblées quand l'extrémité mâle (2) est vissée dans l'extrémité femelle (3),
l'extrémité mâle (2) incluant : un filetage mâle (22) prévu sur une périphérie extérieure de l'extrémité mâle (2) et constitué par un filetage conique avec un diamètre diminuant progressivement vers un bout ; une surface d'étanchéité intérieure d'extrémité mâle (23) prévue sur la périphérie extérieure de l'extrémité mâle (2) et située davantage vers le bout que le filetage mâle (22) ; un nez (24) situé davantage vers le bout que la surface d'étanchéité intérieure d'extrémité mâle (23) et ayant une surface périphérique extérieure contiguë, de façon lisse, à la surface d'étanchéité intérieure d'extrémité mâle (23) ; une surface d'épaulement de couple (25) formée par une face de bout du nez (24) ; et une surface d'étanchéité extérieure d'extrémité mâle (21) prévue sur la périphérie extérieure de l'extrémité mâle (2) et située davantage vers une base que le filetage mâle (22),
l'extrémité femelle (3) incluant : un filetage femelle (32) prévu sur une périphérie intérieure de l'extrémité femelle (3) et adapté pour être en prise avec le filetage mâle (22) lorsque le raccord est assemblé ; une surface d'étanchéité intérieure d'extrémité femelle (33) prévue sur la périphérie intérieure de l'extrémité femelle (3) et adaptée pour être en contact avec la surface d'étanchéité intérieure d'extrémité mâle (23) lorsque le raccord est assemblé ; une partie sans filetage (34) ayant une surface périphérique intérieure faisant face à la surface périphérique extérieure du nez (24) de manière telle que ces surfaces sont agencées dans une direction radiale et laissent un jeu lorsque le raccord est assemblé ; une surface d'épaulement de couple (35) faisant face à la surface d'épaulement de couple (25) de l'extrémité mâle (2) de manière telle que ces surfaces sont agencées dans une direction axiale, la surface d'épaulement de couple (35) étant en contact avec la surface d'épaulement de couple (25) de l'extrémité mâle (2) lorsque le raccord est assemblé ; et une surface d'étanchéité extérieure d'extrémité femelle (31) prévue sur la périphérie intérieure de l'extrémité femelle (3) et adaptée pour être en contact avec la surface d'étanchéité extérieure d'extrémité mâle (21) lorsque le raccord est assemblé,
dans lequel le filetage mâle (22) et le filetage femelle (33) sont construits de manière telle que, lorsque le raccord est assemblé, un jeu est formé entre un flanc de guidage du filetage mâle (22) et un flanc de guidage du filetage femelle (32) lorsqu'aucune charge de compression axiale n'est appliquée et, lorsqu'une charge de compression axiale prédéterminée agit sur le raccord fileté, l'extrémité mâle (2) et l'extrémité femelle (3) se déforment élastiquement de manière telle que le flanc de guidage du filetage mâle (22) et le flanc de guidage du filetage femelle (32) entrent en contact de manière telle qu'une certaine partie de la charge de compression axiale est transmise entre ces flancs de guidage,
la surface d'étanchéité extérieure d'extrémité mâle (21) et la surface d'étanchéité extérieure d'extrémité femelle (31) sont façonnées de manière telle que, lorsque l'extrémité mâle (2), telle qu'assemblée sur l'extrémité femelle (3), est poussée dans l'extrémité femelle (3) par une charge de compression axiale dans une direction du bout, la surface d'étanchéité extérieure d'extrémité femelle (31) augmente son diamètre,
dans lequel un angle d'épaulement n'est pas inférieur à 0° et est inférieur à 10°, l'angle d'épaulement étant défini comme étant l'angle formé par un plan perpendiculaire à l'axe de tuyau et une ligne droite passant à travers un bord radialement extérieur et un bord radialement intérieur de la surface d'épaulement de couple (35) de l'extrémité femelle (3) en vue en section transversale longitudinale, où un angle positif signifie que le bord radialement extérieur est situé davantage vers le bout que le bord radialement intérieur.

2. Raccord fileté (1) selon la revendication 1, dans lequel l'angle d'épaulement n'est pas supérieur à 7,5°.

3. Raccord fileté (1) selon la revendication 1, dans lequel l'angle d'épaulement n'est pas inférieur à 4,5° et n'est pas supérieur à 5°.

4. Raccord fileté (1) selon la revendication 1, 2, ou 3, dans lequel l'extrémité femelle (3) est construite de manière telle qu'une charge agissant sur le flanc de guidage du filetage femelle (32) génère une contrainte interne qui déforme l'extrémité femelle (3) pour réduire un diamètre d'une partie incluant la surface d'étanchéité extérieure d'extrémité femelle (31) et proche de celle-ci.

5. Raccord fileté (1) selon l'une quelconque des revendications 1 à 4, incluant un tuyau (P) incluant un corps de tuyau (P_{body}) et l'extrémité mâle (2) prévue sur une terminaison du corps de tuyau (P_{body}), et un couplage tubulaire (C) pour raccorder le tuyau (P) à un autre tuyau, le couplage (C) incluant un corps de tuyau (C_{body}) et l'extrémité femelle (3) prévue sur une terminaison du corps de tuyau (C_{body}),
dans lequel un diamètre extérieur du corps de tuyau (C_{body}) et de l'extrémité femelle (3) du couplage (C) n'est pas inférieur à 100 % et n'est pas supérieur à 105 % d'un diamètre extérieur du corps de tuyau (P_{body}) du tuyau (P), et un diamètre intérieur du corps de tuyau (C_{body}) du couplage (C) n'est pas inférieur à 90 % et est inférieur à 100 % d'un diamètre intérieur du corps de tuyau (P_{body}) du tuyau (P).
